# EUROPÄISCHE PATENTSCHRIFT

(11) **EP 0 808 095 B1**
(45) Veröffentlichungstag und Bekanntmachung des Hinweises auf die Patenterteilung: **01.12.1999**
(21) Anmeldenummer: 96904017.9
(22) Anmeldetag: 08.02.1996
(51) Int. Cl.: A01D 25/04

(54) **RODEVORRICHTUNG FÜR ZUCKERRÜBEN**
LIFTING DEVICE FOR SUGAR BEET
DISPOSITIF D'ARRACHAGE DE BETTERAVES SUCRIERES

(30) Priorität: 09.02.1995 DE 19504252
(43) Veröffentlichungstag der Anmeldung: 26.11.1997
(73) Patentinhaber: Gramse, Siegfried, 38228 Salzgitter (DE)
(72) Erfinder: Gramse, Siegfried, 38228 Salzgitter (DE)
(86) Internationale Anmeldenummer: EP9600519
(87) Internationale Veröffentlichungsnummer: WO9624241

(56) Entgegenhaltungen:
- DE-A- 2 727 158
- DE-U- 8 334 718

## Beschreibung

Die Erfindung bezieht sich auf eine Rodevorrichtung für Zuckerrüben, mit mindestens einem im Erdreich rübenlockernd und rübenanhebend wirkenden Rodewerkzeug und einem demselben zugeordneten, die Rübe von zwei Seiten erfassenden und eingeklemmt nach hinten hochfördernden, dabei den Rodevorgang und/oder die Erdabscheidung von der Rübe unterstützenden Fingerrad-Paar.

Bei den bisher bekannten derartigen Rodevorrichtungen (vgl. z.B. DE-OS 20 41 595 , DE-OS 29 37 544) bestehen die Fingerräder oder Hubräder aus einer Nabe und einem Fingerstern aus Gummi, dessen einzelne Finger einen rechteckigen Querschnitt aufweisen. Solche Gummi-Fingerräder zeigen in der rauhen Praxis des Rübenrodens den großen Nachteil, daß die Gummifinger relativ schnell einem Alterungsprozeß unterliegen und dabei aufgrund von Materialermüdung und/oder Überbelastung am nabenseitigen Ende einreißen oder sogar abbrechen - in jedem Fall ist in unwirtschaftlicher Weise eine ungenügend lange "Standzeit" gegeben. Die Rüben-Klemmung reicht aufgrund geringer Klemmkraft der seitwärts ausweichenden Gummifinger vielfach nicht aus, um ein verlustarmes Hochfördern der Rüben aus dem Rodebereich zu gewährleisten, so daß insbesondere bei schneller Rodearbeit kleine Rüben leicht verloren werden. Die Rodeleistung wird dadurch erheblich beeinträchtigt. Außerdem baut sich an den eckigen Gummifingern verhältnismäßig schnell und stark Erde auf. Dieser "Schmutzaufbau" beeinträchtigt die Erdabscheidung von gerodeten Rüben und macht intensive Rübenreinigung auf der nachgeschalteten Förderstrecke erforderlich.

Soweit bereits Fingerräder mit Metallfingern bekannt sind (vgl. DE-GM 17 73 582) , werden dieselben nicht zum klemmenden Ergreifen der Rüben eingesetzt.

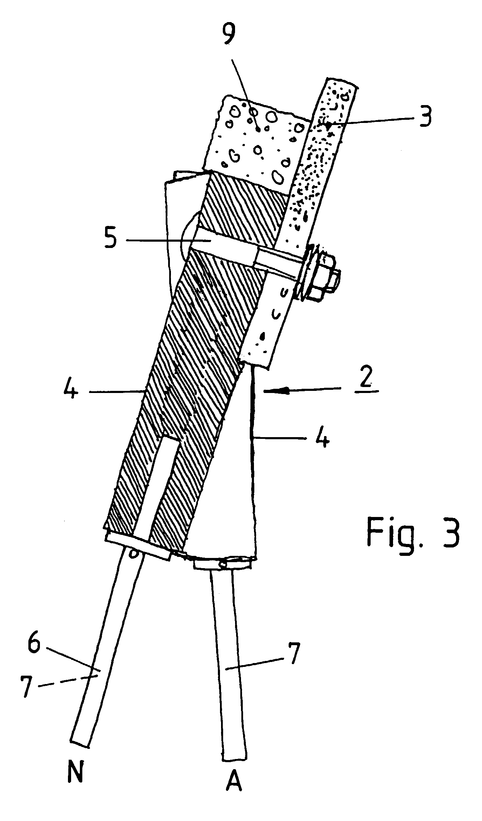

Durch das DE-GM 83 34 718 ist außerdem eine Vorrichtung der gattungsbildenden Bauart bekannt, bei der gemäß Hauptanspruch mindestens ein Fingerrad eines Fingerrad-Paares zwischen den elastischen Mitnehmerfingern mit einem in sich steifen Mitnehmerfinger versehen ist - gemäß Beschreibung (vgl. Seite 6, Zeile 29-32) besitzt jedes Fingerrad in bevorzugter Weise zwei einander gegenüberliegende steife Mitnehmerfinger. Zur Befestigung weist jeder steife Mitnehmerfinger eine Befestigungsgabel auf, mit welcher er den Flansch der starren Radnabe sowie den Ringkörper des Fingersterns übergreift. Um eine kippsichere Einspannung zu erreichen, ist im Bereich des aus elastischem Werkstoff bestehenden Fingersterns (Gummikörpers) eine Hülse angeordnet, die sich einerseits an der Befestigungsgabel des steifen Mitnehmerfingers und andererseits am Flanschkörper der Radnabe abstützt - vgl. hierzu auch Figur 3. Diese Befestigungsart für starre Mitnehmerfinger ist kontruktionsaufwendig, teuer und unwirtschaftlich. Gemäß Beschreibungseinleitung dieses DE-GM sollen die Rüben durch die elastischen Mitnehmerfinger schonend behandelt werden und die steifen/starren Finger sollen für ein gutes Durchziehen bei einem eventuellen Rübenstau sorgen. Aufgrund der wenigen, nämlich zwei pro Fingerrad, vorhandenen steifen Mitnehmerfinger läßt sich das Problem des Rübenverlustes beim Roden kleiner Zuckerrüben nicht bewältigen und die vielen elastischen Mitnehmerfinger (Gummifinger) unterliegen großer Materialbeanspruchung, Materialermüdung und frühzeitigem Verschleiß. Außerdem ist auch mit dieser Hubrad-Konstuktion eine zu geringe Rodeleistung gegeben.

Der Erfindung liegt die Aufgabe zugrunde, eine Rodevorrichtung der eingangs erwähnten Bauart zu verbessern und bei einfachem Aufbau unter Steigerung der rübenklemmenden Funktion für eine längere "Standzeit" der Fingerräder zu sorgen, den Schmutzaufbau an den Fingern im Rodebereich zu reduzieren sowie die Erdabscheidung innerhalb der Rodevorrichtung zu intensivieren.

Erfindungsgemäß wird dies durch eine Rodevorrichtung gemäß Anspruch 1 gelöst. Vorteilhafte Weiterbildungen der Erfindung ergeben sich aus den Unteransprüchen.

Bei der erfindungsgemäßen Rodevorrichtung ist aufgrund der aus Metall bestehenden und vorzugsweise im Querschnitt abgerundeten, in jedem Fall nachgiebig und vibrationsfähig gehaltenen Mitnehmerfingern (Hubrad-Fingern) eine sehr gute Selbstreinigung des Fingerrad-Paares sowie eine stets einwandfreie Rüben-Klemmung - dabei ohne Beschädigung der Rüben-Oberfläche - gegeben. Dies ermöglicht einerseits eine äußerst verlustarme Rodearbeit auch bei schneller Fahrt und andererseits eine intensive Erdabscheidung von den gerodeten Zuckerrüben bereits im Rodebereich, daß heißt bereits bei der Hochförderung aus dem Rodebereich. Durch die hohe Erdabscheidung des erfindungsgemäßen Systems kann auf harte Zusatz-Reinigungselemente innerhalb des Rübenroders verzichtet werden sowie außerdem der Vorteil einer direkten Überladung auf nebenherfahrende Wagen genutzt werden. Die Voraussetzungen für eine gute Zuckerrüben-Lagerung auf/in Mieten werden aufgrund der höheren (dies im Vergleich zum Vorbekannten) vorausgehenden Erdabscheidung wesentlich verbessert. Die innerhalb des Hubrad-Bereiches wirkende Rüben-Reinigung basiert auf der erfindungsgemäßen Zinken-Anordnung in einem großen Gummiring. Außerdem wird aufgrund der erfindungsgemäßen Zinken-Ausführung und Zinken-Anordnung eine große Lebensdauer (sogenannte "Standzeit") erzielt, was die Einsatzfähigkeit eines Rübenroders erheblich steigert und auch von großem wirtschaftlichen Nutzen ist.

Gegenüber dem Vorbekannten zeichnet sich der Erfindungsgegenstand dadurch aus, daß die Lagerung der starren Zinken ausschließlich im elastischen Lagerring erfolgt und somit die zu haltende Zuckerrübe relativ zum Grundkörper seitwärts bewegbar und durch die Rückstellkraft des Lagerrings automatisch in die Grundposition bewegbar sind. Aufgrund der erfindungsgemäßen Zinken-Anordnung in einem nur stellenweise (insbesondere punktuell) mit dem Nabenkörper verbundenen und somit von diesem partiell abhebbaren elastischen Ringteil können die einzelnen Zinken im Bedarfsfall im großen Maße zur Seite ausweichen und trotzdem mit ausreichender Klemmkraft auf die zu klemmende und zu befördernde Zuckerrübe einwirken - dabei wird ein ausreichend hoher punktueller oder linienförmiger Seitendruck ausgeübt.

Von besonderem Vorteil ist eine Ausgestaltung mit abwechselnd auf kurzer und langer Strecke im elastischen Ringteil eingebetteen Zinken.

Während die Zinken eines jeden Fingerrades der erfindungsgemäßen Rodevorrichtung radial steif sind (im Gegensatz zu den vorbekannten Gummifingern beim Stand der Technik) , können sie seitwärts mit hoher Rückstellkraft im großen Maße ausweichen, wobei die langen (daß heißt auf langer Strecke eingebetteten) Zinken samt des sie aufnehmenden Gummiteils verschwenken und das Ausweichmaß zur Seite gegenüber der Neutrallage etwa 50-75 mm betragen kann.

Selbstverständlich wird aufgrund der Einbettung im Gummiring für jeden Zinken auch eine geringfügige nachlaufende Abbiegung aus der bevorzugten radialen Neutrallage ermöglicht, was bei Abgabe der hochgeförderten Rübe zu einer Vibrationsbewegung - mit vorteilhafter Erdabschüttelung und gewolltem Selbstreinigungseffekt - führt.

Die Einbettung der Stahlzinken im gummielastischen Lagerring gewährleistet ohne zusätzliche Elemente und/oder Steuerungsorgane die automatische Rückstellung in die Ausgangsposition, sobald eine Rübe rückwärtig abgefördert worden ist.

Während bei den vorbekannten oben erwähnten Rodeeinrichtungen mit Gummifingerrädern ein gewisses "Schieben" der Rüben und teilweise sogar ein gewisser Rübenstau nicht zu verhindern ist, werden bei der erfindungsgemäßen Rodevorrichtung störende leistungsmindernde Turbu- sowie nachteilige Staubildung vermieden.

Von besonderem Vorteil ist, daß der durch das Rodeschar aufgenommene Erdstrom unmittelbar während des Rodepozesses von den elastisch nachgiebig gelagerten Stahlzinken eines jeden Fingerrades/Hubrades intensiv - in der Art eines Quirlvorgangs - bearbeitet und gleichzeitig zu einem großen (hohen) Anteil von den Rüben getrennt sowie fein zerkrümmelt sofort, daß heißt ohne Einsatz zusätzlicher Elemente, auf dem Boden verteilt wird. Es wird bereits innerhalb des Fingerad-Paares eine Vorreinigung erzielt, welche eine Zusatz- oder Nach-Reinigung innerhalb des Roders überflüssig machen kann und letztendlich eine direkte Überladung zuläßt.

Bei einer bevorzugten Weiterbildung des Erfindungsgedankens sind die Zinken, welche im Rodebereich V-förmig zueinander stehen, im äußeren Endbereich derart nach außen abgewinkelt, daß sich ein etwa paralleler oder bodenwärts geringfügig nach außen erweiternder Spalt zwischen den beiden zusammenwirkenden Fingerrädern ergibt. Dieser " Zinken-Knick" verhindert, daß auf kleine und mittlere Rüben durch die Zinken-Enden eine zu starke Punktbelastung ausgeübt werden kann und stattdessen für eine größere Anlage an der Zuckerrübe gesorgt wird. Der Abknick-Winkel hängt vom V-Winkel des Fingerrad-Paares ab - in bevorzugter Weise beträgt er etwa 10-20° .

Gemäß einer weiteren Ausgestaltung des Erfindungsgedankens sind die Stahlzinken mit ihrem auf die obere Rübenhälfte einwirkenden Bereich nach außen gewölbt (ausgebaucht) abgebogen. Hierbei ergibt sich ein vergrößerter Aufnahmeraum für den Rübenkopf und die Zuckerrüben können weiter unten, daß heißt im Wurzelbereich, und dabei mit vergrößerter Anlagefläche ergriffen werden. Auch bei diesen "gewölbten" Zinken können die Zinken-Enden wie vorerwähnt von der Rübe nach außen abgebogen oder abgewinkelt sein.

Weiterhin ist es bevorzugt und vorteilhaft, für die "kurzen" Zinken am Außenrand des Gummiringes nockenartige Ansätze vorzusehen, welche den Dehnungsbereich des Gummiringes für diese Zinken vergrößert.

Auf der Zeichnung sind Ausführungsbeispiele der Erfindung dargestellt und werden nachfolgend näher erläutert. Es zeigen :
- Fig. 1: eine Vorderansicht einer erfindungsgemäßen Rübenrode-Vorrichtung mit einem einem Rodewerkzeug zugeordnetem Fingerrad-Paar, wobei jedes Fingerrad in einem elastischen Lagerring mit Stahlzinken versehen ist, die gerade (linear) ausgeführt sind,
- Fig. 2: einen Ausschnitt der Zinken-Anordnung der Ausführung gemäß Figur 1, wobei abwechselnd kurze und lange Stahlzinken vorgesehen sind,
- Fig. 3: einen Schnitt durch den Zinkenlagerungsbereich derselben Ausführung, wobei in einem tellerartigen Lagerring kurze und lange Zinken gelagert sind, von denen die langen Zinken gegenüber einem starren Nabenteil samt elastischem Lagerringbereich abhebbar sind und die Ausweich-Position aufgezeigt wird,
- Fig. 4: in schematischer Vorderansicht eine Auschnittsdarstellung des rübenklemmenden Bereichs eines Fingerad-Paares mit gewölbten Zinken und
- Fig. 5: einen Ausschnitt einer gegenüber Fig. 2 abgeänderten Zinken-Anordnung, wobei der Lagerring im Bereich der kurzen Zinken mit nockenartigen Ansätzen versehen ist.

Eine erfindungsgemäße Rodevorrichtung für Rüben, insbesondere Zuckerrüben, setzt sich pro Rübenreihe aus einem als Platten- und/oder Zinkenschar ausgeführten Rodewerkzeug 1, welches im Erdreich wirkt und eine rübenlockernde und rübenanhebende Funktion ausübt, sowie einem diesem zugeordneten, die Rübe von zwei Seiten erfassenden und in Klemmhalterung nach hinten hochfördernden Fingerrad-Paar 2 zusammen. Die beiden Fingerräder 2 stehen in Draufsicht nach hinten und in der Vorderansicht zum Boden hin - jeweils mit einem Zwischenraum - konvergierend V-förmig zueinander. Mindestens eines der beiden Fingerräder 2, vorzugsweise beide Fingerräder 2, sind angetrieben. Die Drehzahl kann veränderbar sein, um so an die jeweiligen Voraussetzungen (Bodenverhältnisse, Rüben etc.) sich optimal anzupassen und dadurch beste Erdabscheidung zu gewährleisten. Des weiteren kann zwischen beiden Fingerrädern 2 eines Fingerrad-Paares eine kleine Drehzahl-Differenz sinnvoll sein und dementsprechend zumindest als Option ein Fingerad-Antrieb mit unterschiedlich vorgegebenen und/oder einstellbaren Drehzahlen vorgesehen sein.

Jede Rodeschar-Hälfte kann rückwärtig mit einem nach hinten hochgebogenen Rüben-Leitstab (nicht dargestellt) versehen sein.

Jedes Fingerrad 2 weist ein starres Nabenteil 3 auf, an dem ein Lagerring 4 aus elastischem Werkstoff, vorzugsweise ein Gummiring, an mehreren Stellen - die vorzugsweise auf einem konzentrisch zur Rotationsachse vorgesehenen Kreis liegen - befestigt ist. Die entsprechenenden Verbindungsstellen sind mit 5 beziffert und werden von bolzenartigen Elementen, vorzugsweise Kopfschrauben mit Muttern, gebildet. Der elastische Lagerring 4 kann einteilig ausgeführt sein, sich jedoch aus mehreren Segmenten (sektoralen Abschnitten) zusammensetzen (wobei dasselbe erfindungsgemäße Prinzip der Zinken-Anordnung bevorzugt ist und dementsprechend beibehalten wird) .

Die Verbindungsstellen 5 sind in bevorzugter und vorteilhafter Weise im gleichen Winkel/Winkelabstand zueinander vorgesehen und jeweils in der Weise vorhanden, daß ein partielles Abheben des elastischen Lagerringes 4 - egal, ob einteilig oder mehteilig ausgeführt - vom starren Nabenteil 3 möglich ist. In besonders bevorzugter Weise sind die Fingerräder 2 als 20-Zinken-Räder ausgebildet und dabei mit zehn Verbindungsstellen 5 zwischen einem einteiligen Lagerring 4 und dem Nabenteil 3 pro Fingerrad 2 versehen, bei einer Ausführung des Lagerringes 4 aus mehreren Segmenten können sich dieselben in den Endbereichen überlappen und dementsprechend zwei benachbarte Segmente eine gemeinsame Verbindungsstelle 5 haben.

Der elastische Lagerring 4 nimmt (dabei unabhängig von seiner eigenen Ausbildung in ein- oder mehrteiliger Konfiguration) starre Zinken 6 oder 6,7 oder 6,7,8 auf. Die Zinken 6-8 enden auf einem gemeinsamen Kreisbogen, sind jedoch mit unterschiedlicher Schaftlänge im Lagerring 4 eingebettet und daher als kurze Zinken 6, lange Zinken 7 oder mittlere Zinken 8 bezeichnet.

Diese Zinken 6, 7, 8 sind aufgrund der Einbettung im elastischen Lagerring 4 federnd gehalten und ermöglichen ein gewisses Abbiegen gegenüber der Neutral-Position (unbelastete Normallage) sowie eine Vibration bei/nach Rüben-Abgabe.

In bevorzugter Weise werden die Fingerrad-Zinken 6-8 von Stahlzinken gebildet und haben einen runden (insbesondere kreisförmigen) bzw. abgerundeten (beispielsweise ovalen) Querschnitt - eine besonders vorteilhafte Ausführung liegt vor, wenn die Zinken 6, 7, 8 aus Rundstahl gefertigt sind.

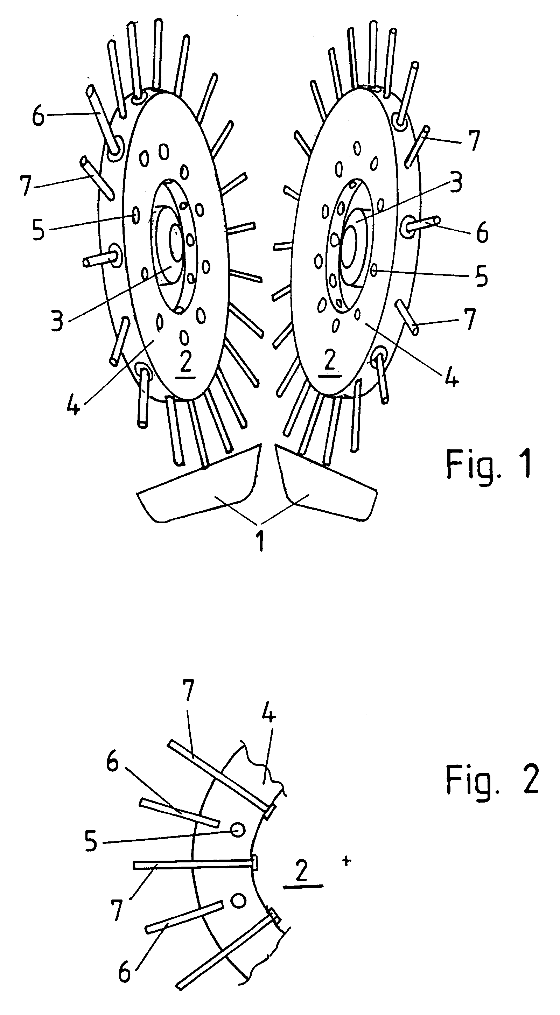

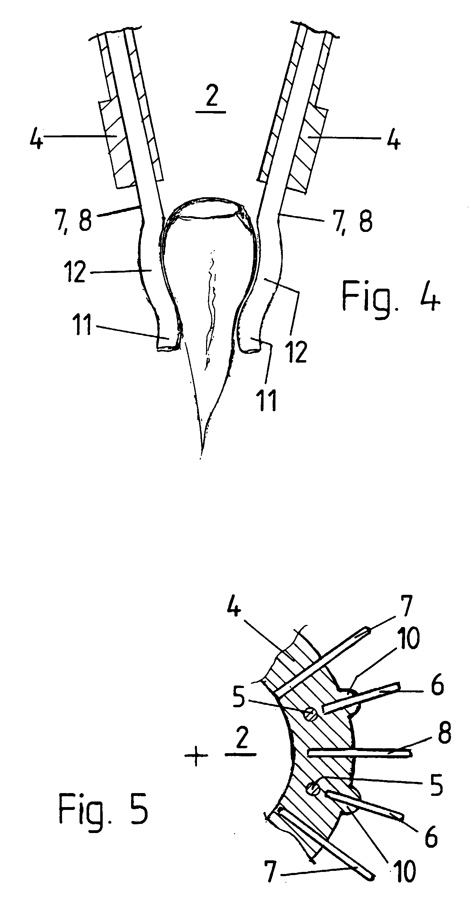

Wie aus Figur 2 zu ersehen ist, sind im elastischen Lagerring 4, insbesondere einem Gummiring (einteilig ausgeführt oder aus mehreren Segmentteilen zusammengesetzt) rechteckigen Querschnitts (in der Grundform - wobei davon eine Aufnahme für das Nabenteil 3 ausgespart sein kann, wie die Zeichnung es prinzipiell offenbart) , dessen Rechteck-Längsachse radial zur Fingerrad-Rotationsachse sowie dabei vorzugsweise auf einer Tellerfläche liegend verläuft, abwechselnd kurze Zinken 6 und lange Zinken 7 angeordnet. Bei besonders bevorzugter Fingerrad-Gestaltung mit insgesamt zwanzig Zinken sind zehn "kurze" Zinken 6 und zehn "lange" Zinken 7 vorhanden. Die Zinken 6 geben dabei schneller, daß heißt bei geringerer Belastung oder Krafteinwirkung, nach als die in längerer (großflächigeren) "Einspannung" gehaltenen Zinken 7 (bei der abgeänderten Ausbildung gemäß Figur 5 : 7, 8) - dabei erstrecken sich die längeren Zinken 7 (oder die langen und mittleren Zinken 7/8 gemäß Figur 5) jeweils etwa auf der Mitte zwischen zwei der Lagerring-Befestigung dienenden Verbindungsstellen (insbesondere Schrauben) 5, wogegen die "kurzen" Zinken 6 etwa im Bereich der Verbindungsstelle 5 angeordnet sind und - mit denselben (5) zumindest annähernd auf einer durch die Zinkenachse gehenden Linie (Radialen zur Fingerrad-Drehachse) liegend - kurz vor einer solchen (5) enden (siehe Figur 2 und/oder 5).

Bei der gegenüber Figur 2 abgeänderten Ausführung gemäß Figur 5 sind die Hälfte der starren Zinken als "kurze" Zinken 6 und die andere Hälfte als ""längere" - nämlich "lange" plus "mittlere" - Zinken 7 und 8 (wiederum je zur Hälfte der Gesamtsumme sowie einander abwechselnd : "lange" Zinken 7 und "mittlere" Zinken 8) ausgeführt. Die besonders bevorzugte 20-Zinken-Ausführung weist demnach zehn kurze Zinken 6, fünf lange Zinken 7 und fünf mittlere Zinken 8 auf - dies Verhältnis gilt grundsätzlich auch für eine andere Zinken-Anzahl.

In bevorzugter Weise sind die Zinken 6,7,8 innerhalb der bevorzugten tellerartigen Anordnung radial zur Fingerrad-Rotationsachse angeordnet.

Die Zinken 6, 7, 8 sind in bevorzugter und besonders einfacher sowie wirtschaflicher Weise einvulkanisiert.

Es ist jedoch auch möglich, die Zinken 6, 7, 8 in einer Steckverbindung im Lagerring 4 anzuordnen und gegen axiale Verschiebung durch den Querschnitt vergrößernde (querschnittsvergrößernde) Elemente - wie Bund, Sicherungsscheibe, Mutter, auf den Zinken aufgesteckte Spannhülse oder dergleichen - und/oder Rückhalteelemente zu sichern.

Wie aus Figur 3 zu ersehen ist, kann der innere Bereich eines Lagerringes 4 durch einen sich am inneren Rand (Gummischeiben-Rand) anlegenden Abdeckring 9, vorzugsweise einem Schaumstoff-Ring, abgedeckt sein. Eine solche Maßnahme verhindert nachteilige Verschmutzung zwischen Fingerrad-Nabe und der die Zinken 6, 7 und/oder 8 tragenden elastischen Scheibe, insbesondere Gummischeibe.

Jedes sternartig ausgebildete Fingerrad 2 hat einen Durchmesser von vorzugsweise etwa 600-700 mm.

Der Zinken-Durchmesser beträgt vorzugsweise etwa 10-16 mm.

Die freie Zinken-Länge (daß heißt, die über das elastische Teil, das sogenannte Gummiteil, hinausragende Länge der Zinken 6, 7 und/oder 8) kann etwa 100-150 mm betragen.

Die "langen" Zinken 7 erstrecken sich vorzugsweise durch den gesamten Ring-Querschnitt des Lagerringes 4 und die "kurzen" Zinken 6 dringen nur in das äußere Drittel oder die äußere Hälfte des Ring-Querschnitts ein. Die "kurzen" Zinken 6 enden auf der Fingerrad-Radialen vor einer Verbindungsstelle 5 (vergleiche Figur 2 und 5). Die sogenannten "mittleren" und mit 8 bezifferten Zinken reichen dagegen etwa bis in den Bereich des Kreises, auf dem die Verbindungsstellen 5 liegen (vergleiche Figur 5).

Die insbesondere von Kopfschrauben mit Muttern gebildeten Verbindungsstellen 5 liegen innerhalb der achsseitigen Hälfte des Ring-Querschnitts eines jeden Laggeringes 4, insbesondere nahe der inneren Querschnitts-Drittelung.

Die Positionen 5 können mit Tellerfedern ausgerüstet sein.

Zusätzlich zu den vorerwähnten Merkmalen kann entsprechend Figur 5 - dies gilt für alle Ausgestaltungen der Erfindung - der elastische Lagerring 4 im Bereich eines jeden sogenannten kurzen Zinkens 6 am äußeren Rand mit einem nockenartigen (oder auch als "Tülle" bezeichneten) Ansatz 10 versehen sein. Ein solcher Ansatz 10 verlängert die Einbettung eines Zinkens 6 und vergrößert den Dehnungsbereich des Gummiringes für diesen Zinken. Aufgrund der im Querschnitt verhältnismäßig kleinen und vorspringenden Masse gewährleistet jeder Ansatz 10 eine leichtgängige Nachgiebigkeit und somit gute Anpaßmöglichkeit mit großer Bewegungfreiheit für den einzelnen Zinken und trotzdem eine äußerst gute (lange) Zinken-Halterung.

Anstelle der geradlinigen (linearen) Ausbildung der Zinken 6, 7 und/oder 8 können dieselben im Bereich ihres freien Ende nach außen (daß heißt von der Zuckerrübe weg) abgewinkelt/abgebogen sein. Diese Abwinklung oder Abbiegung ist mit 11 beziffert. Das Maß für diese Abwinklung oder Abbiegung gegenüber der Zinken-Längsache richtet sich in bevorzugter Weise nach der Fingerrad-Schrägstellung in bezug auf die Vertikale und wird vorzugsweise so gewählt, daß die Zinken-Enden im Einwirkungsbereich auf die zu erfassende Zuckerrübe etwa parallel zur Radpaar-Symmetrieebene oder leicht nach außen "geknickt" sind. Aufgrund solcher Zinken-Ausbildung im freien Endbereich wirken die einzelnen Zinken 6-8 auf vergößerter Strecke und unter Linien-Berührung auf die zu erfassende und hochzufördernde Zuckerrübe ein. Außerdem ermöglicht diese Ausbildung der Zinken-Enden ein Erfassen der unteren Rüben-Hälfte (daß heißt des Wurzelbereichs) ohne Beschädigungsgefahr durch Zinkenspitzen. Der Abknick-Winkel kann etwa 10-20° betragen.

Bei einer weiteren bevorzugten Ausgestaltung der Erfindung sind die Zinken 6 oder 6,7 oder 6-8 im Bereich ihrer auf die obere Rüben-Hälfte einwirkenden Teillänge nach außen gewölbt (ausgebaucht) ausgeführt (vergleiche Figur 4) - dieser gewölbte/ausgebauchte Zinkenteil ist mit 12 beziffert.

Selbstverständlich können die Teilbereiche 11 plus 12 miteinander kombiniert werden - Figur 4 zeigt dies prinzipiell.

In Figur 3 ist die Grundposition (Neutrallage) der Zinken mit "N" und die Ausweichposition mit "A" gekennzeichnet.

## Patentansprüche

1. Rodevorrichtung für Zuckerrüben, mit mindestens einem im Erdreich rübenlockernd und rübenanhebend wirkenden Rodewerkzeug und einem dem Rodewerkzeug zugeordneten, die Rübe von zwei Seiten erfassenden und eingeklemmt nach hinten hochfördernden, dabei den Rodevorgang und/oder die Erdabscheidung von der Rübe unterstützenden Fingerrad-Paar,
dadurch gekennzeichnet, daß zumindest ein Fingerrad (2) eines bzw. des Fingerrad-Paares an einem mit einer Lagernabe versehenen oder verbundenen starren Grundkörper/Nabenteil (3) einen ein- oder mehrteiligen Lagerring (4) aus elastischem Material in Mehrpunkt-Verbindung (5) trägt, in welchem an sich starre Zinken (6,7,8) lagern und durch die zu haltende Rübe relativ zum Grundkörper bzw. Nabenteil (3) seitwärts bewegbar und durch Rückstellkraft des Lagerrings (4) automatisch in die Grundposition bewegbar sind.

2. Rodevorrichtung nach Anspruch 1, dadurch gekennzeichnet, daß jedes Fingerrad (2) in einem Gummiring (5) abwechselnd mit kurz gelagerten Zinken (sogenannten "kurzen" Zinken) (6) und auf längerer Strecke gelagerten Zinken (sogenannten "langen" oder "mittleren" Zinken) (7,8) versehen ist, wobei die Zinken (6,7,8) mit ihrem außenliegenden Zinkenende auf einem Kreis enden (liegen).

3. Rodevorrichtung nach Anspruch 2, dadurch gekennzeichnet, daß die mit großer Eingriffslänge im Lagerring (4) angeordneten - sogenannten "langen" oder "mittleren" - Zinken (7,8) jeweils zwischen zwei der Lagerring-Befestigung am Nabenteil (3) dienenden Verbindungsstellen (5) vorgesehen sind.

4. Rodevorrichtung nach einem der Ansprüche 2 bis 3, dadurch gekennzeichnet, daß die mit kleiner Eingriffslänge im Lagerring (4) angeordneten sogenannten "kurzen" Zinken (6) jeweils im Bereich einer der Lagerring-Befestigung am Nabenteil (3) dienenden Verbindungsstelle (5) vorgesehen sind.

5. Rodevorrichtung nach einem der Ansprüche 2 bis 4, dadurch gekennzeichnet, daß die sogenannten "langen" Zinken (7) den Lagerring-Querschnitt annähernd auf gesamter Länge durchdringen.

6. Rodevorrichtung nach einem der Ansprüche 2 bis 5, dadurch gekennzeichnet, daß die sogenannten "kurzen" Zinken (6) innerhalb der außenliegenden Hälfte des Lagerring-Querschnitts im Lagerring (4) stecken.

7. Rodevorrichtung nach einem der Ansprüche 2 bis 6, dadurch gekennzeichnet, daß jeder Lagerring (4) im Bereich der sogenannten "kurzen" Zinken (6) mit nockenartigen und von den Zinken (6) durchfaßten Ansätzen (10) versehen ist.

8. Rodevorrichtung nach einem der Ansprüche 1 bis 7, dadurch gekennzeichnet, daß die Zinken (6, 7, 8) im jeweiligen Lagerring (4) einvulkanisiert sind.

9. Rodevorrichtung nach einem der Ansprüche 1 bis 8, dadurch gekennzeichnet, daß die Zinken (6, 7, 8) aus Stahl, insbesondere Rundstahl, bestehen und radial zur Radachse verlaufen.

10. Rodevorrichtung nach einem der Ansprüche 1 bis 9, dadurch gekennzeichnet, daß die Zinken (6, 7, 8) in einem ursprünglich planen Lagerring (4) aus Gummi stecken, der durch die Verbindungstellen (5) tellerartig - mit rübenseitigem Aufnahmeraum - verformt gehalten wird, so daß die Zinken (6, 7, 8) im gebrauchstüchtigen Fingerrad-Längsschnitt einen Winkel von unter 180° einschließen.

11. Rodevorrichtung nach einem der Ansprüche 1 bis 10, dadurch gekennzeichnet, daß die Zinken (6, 7, 8) mit ihren Enden nach außen, d.h. von der Zuckerrübe fort, abgebogen sind.

12. Rodevorrichtung nach einem der Ansprüche 1 bis 11, dadurch gekennzeichnet, daß die Zinken (6, 7, 8) mit ihrem auf die obere Rüben-Hälfte einwirkenden Bereich unter Bildung eines rübenseitig kunkaven Rüben-Aufnahmeraumes nach außen gewölbt (ausgebaucht) sind.

13. Rodevorrichtung nach einem der Ansprüche 1 bis 12, dadurch gekennzeichnet, daß die der Lagerring-Befestigung dienenden Verbindungssstellen (5) zusätzlich mit mindestens einem Federelement, insbesondere mit einem Tellerfeder-Paket, ausgestattet sind.

## Claims

1. Lifting device for sugar beet, having at least one lifting tool, which has a beet-loosening and beet-lifting action in soil, and having a pair of finger wheels which is assigned to the lifting tool, grips the beet from two sides and, with the beet clamped in, raises the latter in the rearward direction, in the process assisting the lifting operation and/or the operation of stripping the soil from the beet,
characterized in that at least one finger wheel (2) of a or the pair of finger wheels bears, on a rigid basic body/hub part(3), which is provided with a bearing hub or is connected thereto, a single-part or multi-part elastic bearing ring (4) with multi-point connection (5), in which inherently rigid tines (6,7,8) are mounted and can be moved sideways relative to the basic body or hub part (3), as a result of the beet which is to be retained, and can be automatically moved into the initial position, as a result of the restoring force of the bearing ring (4).

2. Lifting device according to Claim 1, characterized in that each finger wheel (2) is provided alternately, in a rubber ring (4), with tines which are mounted therein over a short distance (so-called "short" tines) (6) and tines which are mounted therein over a longer distance (so-called "long" or "medium-length" tines) (7,8), the tines (6,7,8), by way of their outer end, terminating (being located) on a circle.

3. Lifting device according to Claim 1 or 2, characterized in that the tines (7,8) which are arranged with a long engagement length in the bearing ring (4) - so-called "long" or "medium-length" tines - are provided in each case between two connecting locations (5), which serve for fastening the bearing ring on the hub part (3).

4. Lifting device according one of Claims 1 to 3, characterized in that the so-called "short" tines (6), which are arranged with a short engagement length in the bearing ring (4), are provided in each case in the region of a connecting location (5), which serves for fastening the bearing ring on the hub part (3).

5. Lifting device according to one of Claims 2 to 4, characterized in that the so-called "long" tines (7) pass through the bearing-ring in cross section more or less over the entire length.

6. Lifting device according to one of Claims 2 to 5, characterized in that the so-called "short" tines (6) are inserted in the bearing ring (4) within the outer half of the bearing ring in cross section.

7. Lifting device according to one of Claims 2 to 6, characterized in that, in the region of the so-called "short" tines (6), each bearing ring (4) is provided with protrusion-like extensions (10) which have the tines (6) passing through them.

8. Lifting device according to one of Claims 1 to 7, characterized in that the tines (6,7,8) are vulcanized in the respective bearing ring (4).

9. Lifting device according to one of Claims 1 to 8, characterized in that the tines (6,7,8) consist of steel, in particular round steel, and run radially in relation to the wheel axis.

10. Lifting device according to one of Claims 1 to 9, characterized in that the tines (6,7,8) are inserted in an originally planar bearing ring (4) made of rubber, which is kept in a deformed state in a plate-like manner - with beet-side receiving space - by the connecting locations (5), with the result that, in the ready-for-use finger-wheel longitudinal section, the tines (6,7,8) enclose an angle of less than 180°.

11. Lifting device according to one of Claims 1 to 10, characterized in that the tines (6,7,8) have their ends bent outwards, i.e. away from the sugar beet.

12. Lifting device according to one of Claims 1 to 11, characterized in that, in their region which acts on the top half of the beet, the tines (6,7,8) are curved outwards (widened convexly), a beet-receiving space which is concave on the beet side being formed in the process.

13. Lifting device according to one of Claims 1 to 12, characterized in that the connecting locations (5), which serve for fastening the bearing ring, are additionally provided with at least one spring element, in particular with a set of cup springs.

## Revendications

1. Dispositif d'arrachage de betteraves sucrières, comprenant au moins un outil d'arrachage agissant de manière à dégager et à soulever les betteraves, et une paire de roues à doigts associée à l'outil d'arrachage, saisissant les betteraves de deux côtés et les transportant ainsi coincées vers le haut et vers l'arrière, en supportant ainsi le processus d'arrachage et/ou de séparation de la terre des betteraves,
caractérisé en ce qu'au moins une roue à doigts (2) d'une ou de la paire de roues à doigts porte, sur un corps de base/moyeu rigide (3) relié à ou pourvu d'un moyeu de support, une bague de support (4) d'une pièce ou en plusieurs pièces en matériau élastique dans une connexion multipoint (5), dans laquelle des saillies rigides en soi (6, 7, 8) sont logées et sont déplaçables latéralement par rapport au corps de base ou au moyeu (3) par les betteraves à retenir et sont déplaçables automatiquement dans la position de base par la force de rappel de la bague de support (4).

2. Dispositif d'arrachage selon la revendication 1, caractérisé en ce que chaque roue à doigts (2) est pourvue d'une alternance dans une bague en caoutchouc (5) de saillies peu enfoncées (que l'on appelle des saillies "courtes") (6) et de saillies logées plus profondément (que l'on appelle des saillies "longues" ou "moyennes") (7, 8), les saillies (6, 7, 8) se terminant (se situant) sur un cercle par leur extrémité de saillie externe.

3. Dispositif d'arrachage selon la revendication 2, caractérisé en ce que les saillies (7, 8) disposées avec une grande profondeur d'engagement dans la bague de support (4) - que l'on appelle les saillies "longues" ou "moyennes" - sont prévues respectivement entre deux points de connexion (5) servant à la fixation de la bague de support sur le moyeu (3).

4. Dispositif d'arrachage selon l'une quelconque des revendications 1 à 3, caractérisé en ce que les saillies (6) que l'on appelle saillies "courtes" disposées avec une moindre profondeur d'engagement dans la bague de support (4) sont prévues respectivement dans la zone d'un point de connexion (5) servant à la fixation de la bague de support sur le moyeu (3).

5. Dispositif d'arrachage selon l'une quelconque des revendications 2 à 4, caractérisé en ce que les saillies dites "longues" (7) traversent la section transversale de la bague de support approximativement sur toute la longueur.

6. Dispositif d'arrachage selon l'une quelconque des revendications 2 à 5, caractérisé en ce que les saillies dites "courtes" (6) s'enfoncent dans la bague de support (4) sans dépasser la moitié externe de la section transversale de la bague de support.

7. Dispositif d'arrachage selon l'une quelconque des revendications 2 à 6, caractérisé en ce que chaque bague de support (4) est pourvue, dans la zone des saillies dites "courtes" (6), de projections (10) en forme de bosses et traversées par les saillies (6).

8. Dispositif d'arrachage selon l'une quelconque des revendications 1 à 7, caractérisé en ce que les saillies (6, 7, 8) sont intégrées par vulcanisation dans la bague de support (4) respective.

9. Dispositif d'arrachage selon l'une quelconque des revendications 1 à 8, caractérisé en ce que les saillies (6, 7, 8) se composent d'acier, en particulier d'acier rond, et s'étendent radialement à l'axe de la roue.

10. Dispositif d'arrachage selon l'une quelconque des revendications 1 à 9, caractérisé en ce que les saillies (6, 7, 8) s'enfoncent dans une bague de support (4) en caoutchouc initialement plane, qui est maintenue déformée à la manière d'une assiette par les points de connexion (5) - avec un espace de logement du côté des betteraves - de sorte que les saillies (6, 7, 8) forment un angle inférieur à 180° en coupe longitudinale de la roue à doigts en position d'utilisation.

11. Dispositif d'arrachage selon l'une quelconque des revendications 1 à 10, caractérisé en ce que les saillies (6, 7, 8) sont recourbées avec leurs extrémités vers l'extérieur, c'est-à-dire en s'écartant des betteraves sucrières.

12. Dispositif d'arrachage selon l'une quelconque des revendications 1 à 11, caractérisé en ce que les saillies (6, 7, 8) sont déformées vers l'extérieur (bombées) par leur partie agissant sur la moitié supérieure des betteraves en formant un espace de logement des betteraves concave du côté des betteraves.

13. Dispositif d'arrachage selon l'une quelconque des revendications 1 à 12, caractérisé en ce que les points de connexion (5) servant à fixer la bague de support, sont équipés en outre d'au moins un élément de ressort, en particulier d'un ensemble de ressorts à disques.
